# EUROPÄISCHE PATENTSCHRIFT

(11) **EP 0 698 864 B1**
(45) Veröffentlichungstag und Bekanntmachung des Hinweises auf die Patenterteilung: **29.09.1999**
(21) Anmeldenummer: 95110895.0
(22) Anmeldetag: 12.07.1995
(51) Int. Cl.: G07B 15/00, G07F 7/00, G08G 1/127

(54) **Mietfahrzeugverkehrssystem**
Hired vehicle traffic system
Système de circulation des véhicules de location

(30) Priorität: 23.08.1994 DE 4429852
(43) Veröffentlichungstag der Anmeldung: 28.02.1996
(73) Patentinhaber: DaimlerChrysler AG, 70567 Stuttgart (DE)
(72) Erfinder: Klein, Konrad, Dr.-Ing., D-73760 Ostfildern (DE); Metsch, Günther, Dr., D-71696 Möglingen (DE)

(56) Entgegenhaltungen:
- EP-A- 0 309 318
- EP-A- 0 433 740
- EP-A- 0 451 482
- CH-A- 668 324
- DE-A- 3 927 994
- DE-A- 4 227 969
- FR-A- 2 612 319
- FR-A- 2 656 450
- FR-A- 2 662 285
- GB-A- 2 178 211

## Beschreibung

Die Erfindung bezieht sich auf ein Mietfahrzeugverkehrssystem nach dem Oberbegriff des Patentanspruchs 1. Ein derartiges System vermag in effizienter Weise individuell nutzbare Fahrzeuge in Gebieten bereitzustellen, in denen aus unterschiedlichen Gründen ein uneingeschränkter Individualverkehr mit Privatfahrzeugen nicht möglich oder gewünscht ist. Die Fahrzeuge werden bei diesem System vorzugsweise kurzzeitig zur Durchführung einer bestimmten Fahrt vermietet. In dem betreffenden Gebiet sind Haltestellen mit Haltestellenautomaten eingerichtet, an denen ein berechtigter Systemnutzer ein Fahrzeug des Fuhrparks übernehmen bzw. wieder zurückgeben kann, wobei die Rückgabe nicht an der Haltestelle erfolgen braucht, an der das Fahrzeug ausgeliehen wurde. Im Gegensatz zu den üblichen Autovermietungssystemen, bei denen die Ausgabe von Fahrzeugen an den Haltestellen von dort beschäftigtem Personal getätigt wird, ist ein solches Mietfahrzeugverkehrssystem haltestellenseitig vollständig automatisiert. Im Gegensatz zu Taxisystemen handelt es sich bei diesem System um ein Selbstfahrerverkehrssystem. Gegenüber dem öffentlichen Personennahverkehrssystem besteht des weiteren für die vorliegende Art von Verkehrssystemen der Vorteil der Fahrplanunabhängigkeit und der besseren Flächenerschließung.

Ein solches System ist in der Patentschrift DE 22 10 088 C2 beschrieben. Zum Mieten eines Fahrzeugs des Fuhrparks muß sich ein Benutzer an einem der an jeder Mietstation vorgesehenen Meldepfosten ausweisen, z.B. mittels einer benutzerspezifischen Codekarte. Bei erfolgreicher Identifikation gibt der Meldepfosten eine Fahrberechtigung für ein an der Haltestelle abholbereites Fahrzeug aus, wozu er beispielsweise als Schlüsselautomat ausgebildet sein kann, der den zugehörigen Fahrzeugschlüssel auswirft. Umgekehrt nimmt der Schlüsselautomat bei der Fahrzeugrückgabe an einer der Haltestellen den zugehörigen Fahrzeugschlüssel wieder zurück. Die Meldepfosten stehen mit einer zentralen Kontroll- und Registrierstation in Kommunikationsverbindung, um aus den über die Meldepfosten abgefragten Abfahrts- und Ankunftszeiten die Mietdauer eines gebrauchten Fahrzeuges zu registrieren und die sich daraus ergebende Mietgebühr anzuzeigen. Den Fahrzeugen können hierbei unterschiedliche Fahrzeugschlüssel zugeordnet sein. Vorzugsweise werden die Fahrzeugschlüssel der Reihe nach gemäß der Abgabe am zugehörigen Meldepfosten in diesem aufbewahrt und im Bedarfsfall wieder ausgegeben, wobei die Fahrzeuge in entsprechender Reihenfolge ihrer Ankunft hintereinander auf Ständen, in denen sie im Fall von Elektrofahrzeugen beispielsweise gleichzeitig aufgeladen werden können, aufgestellt sind. In diesem Fall kann der zentralen Station des weiteren die Aufgabe übertragen werden, die Anzahl von Fahrzeugen in den einzelnen Haltestellen zu überwachen, damit bei einem Mangel an Fahrzeugen an einer Haltestelle ein oder mehrere Fahrzeuge von einem zu dieser Haltestelle fahrenden, an einer anderen Haltestelle abfahrenden Fahrzeug angekuppelt mitgenommen werden können. Bei diesem bekannten System hat jedoch der Nutzer keine Möglichkeit, ein bestimmtes Fahrzeug des Fuhrparks für eine gewünschte Fahrt auszuwählen.

Ein in der Offenlegungsschrift DE 42 27 969 A1 beschriebenes Mietfahrzeugverkehrssystem verzichtet auf die Einrichtung vorgegebener Haltestellen. Bei diesem System stehen vielmehr die Fahrzeuge des Fuhrparks selbst mit einer Zentrale in Kommunikationsverbindung, um z.B. die Abrechnung durchzuführen. Über die Kommunikationsverbindung kann bei Bedarf auch der Betriebszustand der Fahrzeuge von der Zentrale kontinuierlich überprüft werden, um Wartungsfälle zu erkennen. Alle Fahrzeuge enthalten eine Steuerungs- und Überwachungseinheit, welche die Nutzungsberechtigung eines Benutzers prüft. Jedes Fahrzeug des Fuhrparks läßt sich hierbei mit einer Codekarte eines berechtigenden Systemnutzers in Betrieb setzen, wobei es von einer Person, die das Fahrzeug gerade in Benutzung hat, durch ein Besetztsignal gegen die Übernahme durch einen anderen Benutzer gesperrt werden kann. Vorzugsweise sind die Fahrzeuge mit einem Navigationssystem ausgerüstet, das mit der Zentrale in Kommunikationsverbindung steht, so daß der Zentrale eine Ortung der Fuhrparkfahrzeuge möglich ist. Dennoch kann bei diesem System, bei dem die Fahrzeuge am Ende der Mietdauer an beliebigen Orten abgestellt werden, nicht gewährleistet werden, daß ein Fahrzeug zu einem bestimmten Zeitpunkt an einer bestimmten Stelle für einen Nutzer zur Verfügung steht. Die Fahrzeuge müssen vielmehr vom Nutzer gesucht werden, wobei es auch nicht möglich ist, die Fahrzeuge dem jeweiligen Benutzer individuell zuzuordnen.

Aus der Offenlegungsschrift WO 89/04901 ist ein Parksystem mit einer Vielzahl von Stellplätzen, einer Einfahrtebene zum Abstellen von Fahrzeugen und einer Ausfahrtebene zum Abholen von Fahrzeugen sowie mit einer Fördereinrichtung zum Befördern eines Fahrzeugs von der Einfahrtebene zu einem Stellplatz und von dort wieder zur Ausfahrtebene bekannt. Zur Systemsteuerung ist eine elektronische Datenverarbeitungsanlage vorgesehen, in die ein jeweiliger Systemnutzer die voraussichtliche Parkdauer eingibt und die über Sensoren den Belegungszustand der Stellplätze erkennt. Die Datenverarbeitungsanlage steuert die Fördereinrichtung nach einem vorgegebenen Programm derart, daß das jeweilige Fahrzeug vor dem eingegebenen Abholzeitpunkt zur Ausfahrtebene befördert wird. Ein mit der Datenverarbeitungsanlage verbundener Kassenautomat zeigt nach Entrichtung der Parkgebühr den Standort des abzuholenden Fahrzeugs in der Ausfahrtebene an.

In der Offenlegungsschrift EP 0 309 318 A1 ist ein Fahrzeugvermietsystem beschrieben, das eine Reservierungsvorrichtung umfaßt, an welcher die Systemnutzer mittels einer nutzerspezifischen Karte Fahrzeugreservierungen vornehmen können. Die Reservierungsvorrichtung steht mit einem jeweiligen Terminal einer Haltestelle in Verbindung, die darüber hinaus mehrere, einzeln zugriffsgesicherte Fahrzeugstandplätze aufweist. Zum Abholen eines reservierten Fahrzeugs gibt der Systemnutzer seine Karte, auf der seine Nutzeridentifizierung gespeichert ist, in das Terminal der betreffenden Haltestelle ein, welches dann eine Freigabeinformation erzeugt, mit welcher die Zugriffssicherungsmittel, z.B. eine Schranke, am betreffenden Standplatz entsichert werden können. Diese Freigabeinformation wird vom Terminal direkt zu den Zugriffssicherungsmitteln übertragen oder auf die nutzereigene Karte geschrieben. Der Systemnutzer begibt sich dann zum Standplatz des gewünschten Fahrzeugs und gibt dort seine nutzereigene Karte ein, worauf das Fahrzeug freigegeben wird. Der Zugang und die Inbetriebnahme des Fahrzeugs erfolgt ebenfalls mit der nutzereigenen, entsprechend vom Terminal geladenen Karte oder alternativ durch einen mechanischen Schlüssel. In letzterem Fall ist an jedem Standplatz ein Schlüsselbehältnis vorgesehen, aus dem der Schlüssel bei Fahrtantritt entnommen und in das er nach Fahrzeugrückgabe wieder zurückgelegt werden kann, wobei das Schlüsselbehältnis ebenfalls zugriffsgesichert ist. Zur Beendigung des Mietvorgangs gibt dann der Fahrzeugmieter seine nutzereigene Karte wieder an den Zugriffssicherungsmitteln und/oder am Terminal ein, damit diese die mietrelevanten Daten erfassen und gegebenenfalls eine in die Karte eingespeicherte, codierte Fahrberechtigung wieder löschen, wonach der Systemnutzer seine Karte wieder an sich nimmt.

In der Offenlegungsschrift EP 0 451 482 A1 ist ein halbautomatisches Fahrzeugvermietsystem offenbart, bei welchem die Mietfahrzeuge direkt mit einer Leitstelle kommunizieren, die dadurch unter anderem die Positionen der Fahrzeuge erfaßt. Die Kommunikation zwischen der Leitstelle und den Fahrzeugen ist so ausgelegt, daß Systemnutzer ein jeweiliges Fahrzeug an einem beliebigen Ort anmieten können, an dem es zuvor abgestellt wurde.

Aus der Offenlegungsschrift DE 39 27 994 A1 ist ein Zugangssystem für Kraftfahrzeuge bekannt, das fahrzeugseitig einen Mikroprozessor mit Kartenlesegerät und nutzerseitig codierte Karten beinhaltet. Die Karten können auf eine beispielsweise zeitlich begrenzte Fahrzeugnutzung hin programmiert werden, so daß z.B. ein damit gemietetes Fahrzeug nur für einen bestimmten Zeitraum oder eine bestimmte Kilometerleistung benutzt werden kann, indem die Stromversorgung des Kraftfahrzeugs nur bis zu dem in der Karte programmierten Nutzungsende freigegeben wird.

Der Erfindung liegt als technisches Problem die Bereitstellung eines Mietfahrzeugverkehrssystems der eingangs genannten Art zugrunde, welches so weitgehend automatisiert ist, daß es den Systemnutzern in komfortabler Weise und mit relativ geringem Aufwand eine Auswahl und eine Reservierung unter den zur Verfügung stehenden Fahrzeugen des Fuhrparks und ggf. die Benutzung eines speziell gewünschten Fahrzeugs oder Fahrzeugtyps ermöglicht.

Dieses Problem wird durch ein Mietfahrzeugverkehrssystem mit den Merkmalen des Patentanspruchs 1 gelöst. Neben den oben erwähnten, sich aus den gattungsgemäßen Merkmalen eines solchen Mietfahrzeugverkehrssystems ergebenden Vorteilen besitzt dieses Mietfahrzeugverkehrssystem darüber hinaus den Vorteil, daß es durch die Ausgestaltung der Zentrale als intelligente Dispositionszentrale möglich ist, ein ausgewähltes Fahrzeug für eine gewünschte Fahrt zu reservieren und nach Abholung an der entsprechenden Haltestelle zu benutzen. Zu diesem Zweck überwacht die Dispositionszentrale anhand der Informationen von den Haltestellenautomaten das Vorhandensein der Fahrzeuge des Fuhrparks an den jeweiligen Haltestellen fahrzeugindividuell. Außerdem kann die Dispositionszentrale von dem Benutzer für eine Reservierung angesprochen werden, woraufhin diese den Benutzer über die momentane Situation der an den jeweils in Betracht kommenden Haltestellen vorhandenen Fahrzeuge informieren kann und auf einen Reservierungswunsch hin die Ausgabe der Fahrberechtigung für das reservierte Fahrzeug an die Eingabe der für die reservierende Person zutreffenden Benutzeridentität koppelt. Damit ist sichergestellt, daß der Benutzer das von ihm gewünschte Fahrzeug an der gewünschten Haltestelle zum gewünschten Zeitpunkt auch tatsächlich vorfindet und in Betrieb nehmen kann.

In vorteilhafter Ausgestaltung der Erfindung erfolgt gemäß Anspruch 2 die Kommunikation zwischen Benutzer und Dispositionszentrale zum Zwecke der Reservierung eines Fahrzeugs über einen haltestellenunabhängigen Informationsübertragungskanal, zum Beispiel über das Telefonnetz, oder über entsprechende Dialogschnittstellen an den Haltestellenautomaten. Letzteres ermöglicht es insbesondere, daß der Benutzer eines der an der Haltestelle, an der die Fahrt angetreten werden soll, momentan abgestellten freien Fahrzeuge zum sofortigen Fahrtantritt auswählen kann.

In Weiterbildung der Erfindung nach Anspruch 3 besteht die von den Haltestellenautomaten ausgegebene Fahrberechtigung aus einer jeweils fahrzeugspezifisch codierten Chipkarte, die als Zugangsberechtigung für das gewählte Fahrzeug dient. Zum Inbetriebsetzen des Fahrzeugs kann ein üblicher Zündschlüssel im Fahrzeug abgelegt sein. Alternativ kann vorgesehen sein, das Fahrzeug mittels der fahrzeugspezifisch codierten Chipkarte zu starten oder mit der Karte zusätzlich eine vorhandene Wegfahrsperre zu entschärfen.

In Weiterbildung der Erfindung werden nach Anspruch 4 auf der fahrzeugspezifisch codierten Chipkarte erfaßte Fahrzeugbetriebsdaten abgespeichert, die dann von den Haltestellenautomaten auslesbar sind und an die Dispositionszentrale übermittelt werden können, um beispielsweise Wartungsfälle zu erkennen.

Eine Weiterbildung der Erfindung nach Anspruch 5 bietet einen erhöhten Schutz vor unberechtigter Fahrzeugnutzung, indem die maximale Dauer einer Mietnutzung auf der Chipkarte gespeichert ist und fahrzeugseitig von einem Schließanlagensteuergerät abgerufen wird, welches bei Überschreitung der Nutzungsdauer veranlaßt, daß das Fahrzeug nach einem Abstellen nicht mehr mit der Chipkarte geöffnet werden kann.

Auch eine Ausgestaltung der Erfindung nach Anspruch 6 dient einem erhöhten Fremdnutzungsschutz, indem die Fahrzeuge mit Wegfahrsperren ausgerüstet sind, die bei überschrittener maximaler Nutzungsdauer geschärft werden.

Mit einer Weiterbildung der Erfindung nach Anspruch 7 läßt sich die Fahrzeugüberwachung durch die Dispositionszentrale verbessern, indem fahrzeugseitig die aktuelle Fahrzeugposition durch Ortung ermittelt und eine entsprechende Positionsinformation dann vom Fahrzeug an die Dispositionszentrale abgegeben wird. Dies ermöglicht der Dispositionszentrale eine noch zuverlässigere Vorhersage über Ort und Zeit des Vorhandenseins bestimmter Fahrzeuge an bestimmten Haltestellen als dies alleine aufgrund der Angabe der Zielhaltestelle durch einen Benutzer bei Fahrtantritt möglich ist.

Eine Ausgestaltung der Erfindung nach Anspruch 8 dient der Sicherheit des Mietfahrzeugverkehrssystems gegenüber unberechtigter Benutzung von Standplätzen an den Haltestellen und/oder dem unberechtigten Zutritt von nicht fahrzeugnutzungsberechtigten Personen zu dem Haltestellenbereich.

Eine bevorzugte Ausführungsform der Erfindung ist in den Zeichnungen dargestellt und wird nachfolgend beschrieben. Hierbei zeigen:
- Fig. 1: eine Schemaskizze eines Teils eines Mietfahrzeugverkehrssystems zur Veranschaulichung von dessen strukturellem Aufbau,
- Fig. 2: ein Blockdiagramm eines Teils des Mietfahrzeugverkehrssystems nach Fig. 1 zur Veranschaulichung der verschiedenen Kommunikationsverbindungen und
- Fig. 3: eine Schemaskizze eines Teils des Mietfahrzeugverkehrssystems nach Fig. 1 zur Veranschaulichung typischer Abläufe des Informationsaustauschs zwischen den Haltestellen und der Dispositionszentrale des Mietfahrzeugverkehrssystems nach Fig. 1 während einer Fahrzeuganmietung bzw. einer Fahrzeugrückgabe.

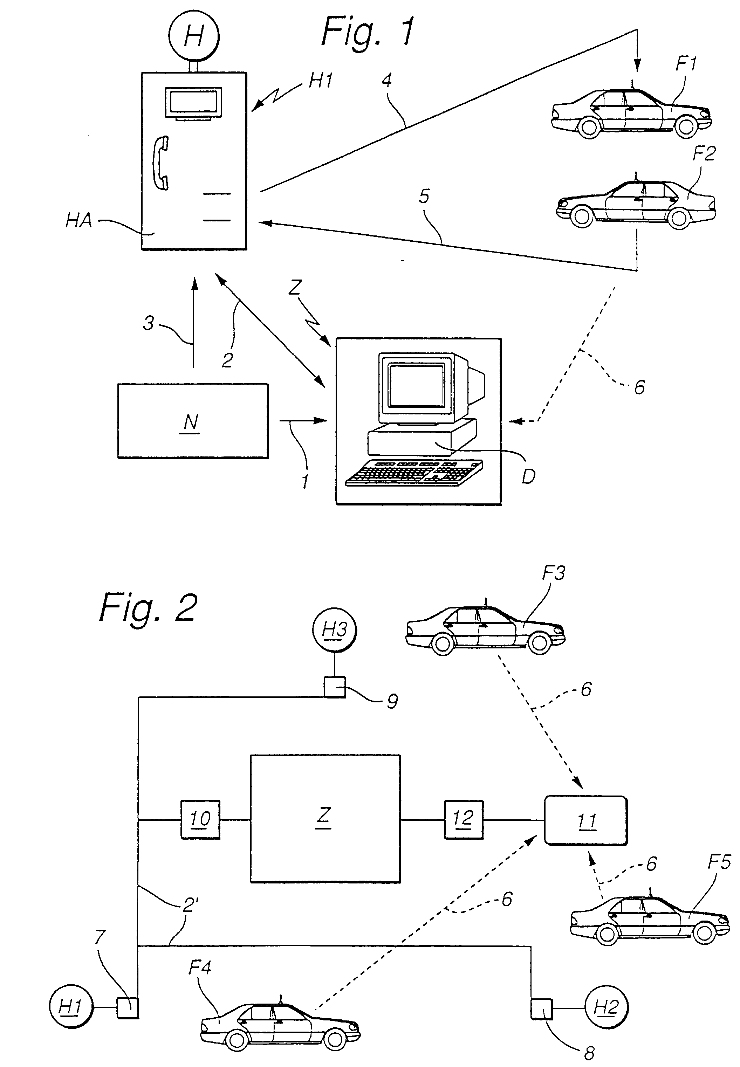

Zunächst wird anhand von Fig. 1 die Struktur des Mietfahrzeugverkehrssystems erläutert. Das System beinhaltet eine Dispositionszentrale (Z) mit einem in der Fig. angedeuteten Dispositionsrechner (D), eine Mehrzahl von Haltestellen, von denen eine (H1) stellvertretend wiedergegeben ist und die jeweils über einen Haltestellenautomat (HA) verfügen, sowie einen Fuhrpark mit einer Vielzahl von Fahrzeugen, von denen in der Fig. zwei (F1, F2) stellvertretend dargestellt sind. Ein Nutzer (N) des Systems kann mit der Dispositionszentrale (Z) über eine übliche Telefonleitung (1) in Kontakt treten. Bei Anwesenheit an der Haltestelle (H1) kann der Nutzer (N) mit dem Haltestellenautomat (HA) in Kommunikationsverbindung (3) treten, und zwar mittels einer Nutzeridentifikationskarte, die ihn als berechtigten Nutzer des Systems ausweist und in einen entsprechenden Kartenleser am Haltestellenautomat (HA) eingeführt werden kann. Zudem kann der Nutzer (N) über eine Telefonleitung inklusive Modem mit der Dispositionszentrale (Z) Verbindung aufnehmen. Über diese Telefonnetzverbindung (1), an die auf Seiten der Dispositionszentrale (Z) anstelle einer Sprechverbindung direkt der Rechner (D) oder alternativ ein Anrufbeantworter angeschlossen sein kann, kann der Nutzer (N) im voraus ein gewünschtes Fahrzeug oder einen gewünschten Fahrzeugtyp aus dem Fuhrpark für eine gewünschte Mietfahrt zu einem anzugebenden Zeitpunkt reservieren. Eine erfolgte Reservierung koppelt die Ausgabe der zu dem ausgewählten Fahrzeug gehörigen Chipkarte daran, daß sich der reservierende Nutzer (N) anhand seiner Nutzeridentifikationskarte am zugehörigen Haltestellenautomat (HA) ausgewiesen hat. Des weiteren ist eine Kommunikationsverbindung (2) zwischen jedem Haltestellenautomat (HA) und der Dispositionszentrale (Z) vorgesehen, über die Informationen zwischen diesen Einheiten (HA, Z) bidirektional übertragen werden können.

Jeder Haltestellenautomat (HA) ist darüber hinaus mit einer Kartenausgabeeinheit und einer Kartenrücknahmeeinheit ausgerüstet, mit denen er Fahrberechtigungen in Form von fahrzeugspezifisch codierten Chipkarten ausgibt und zurücknimmt. Jedes Fahrzeug (F1, F2) ist mit einem Kartenleser an der Fahrertür zum Einführen einer solchen fahrzeugspezifisch codierten, kontaktlosen Chipkarte ausgerüstet. Durch Einführen der für ein jeweiliges Fahrzeug individuell zugeordneten Chipkarte in den Kartenleser wird das Fahrzeug geöffnet und eine vorhandene Wegfahrsperre entschärft, d.h. die Zündung freigegeben. Um die Fahrzeugbatterie nicht ständig zu belasten, wird der fahrzeugseitige Kartenleser erst beim Einführen der Chipkarte über einen mechanischen Mikroschalter aktiviert. Das Abschließen des Fahrzeuges erfolgt ebenfalls mittels der Chipkarte, ohne daß ein herkömmliches mechanisches Schließsystem erforderlich ist. Das Starten und Ausschalten des Motors erfolgt in üblicher Weise mittels eines Zündschlüssels, der bei nicht in Benutzung befindlichem Fahrzeug im Handschuhfach abgelegt ist. Ein Warnsummer ertönt, wenn versucht wird, das Fahrzeug bei nicht ordnungsgemäß ausgeschalteter Zündung durch Eingeben der Karte in den fahrertürseitigen Kartenleser abzuschließen.

Nicht benutzte Fahrzeuge des Fuhrparks befinden sich auf den an jeder Haltestelle (H1) eingerichteten Standplätzen. Eine passende Einfriedung gewährleistet jeweils, daß keine fremden Fahrzeuge die Standflächen belegen. Letzteres wird weiterhin dadurch sichergestellt, daß die Einfahrt in den Standflächenbereich der jeweiligen Haltestelle (H1) nur durch Passieren einer Schranke möglich ist, deren Öffnen das Einlesen der Fahrzeugchipkarte erfordert. Zu diesem Zweck enthält die Fahrzeugchipkarte einen fuhrparkspezifischen Code, anhand dessen an der Schranke die Zugehörigkeit des Fahrzeugs zum Fuhrpark erkannt werden kann. Die Ausfahrt aus dem Standflächenbereich ist durch eine Schranke gesichert, die über eine Induktionsschleife geöffnet wird.

In jedem Haltestellenautomat (HA) sind jeweils diejenigen fahrberechtigenden Fahrzeugchipkarten ausgabebereit abgelegt, deren zugehörige Fahrzeuge sich abholbereit an der entsprechenden Haltestelle befinden. Wenn einem Haltestellenautomat (HA) das Vorliegen einer berechtigten Nutzungsanforderung vom Dispositionsrechner (D) rückgemeldet wird, gibt er die zu dem gewünschten, angeforderten Fahrzeug gehörige Chipkarte aus. Analog nimmt der Haltestellenautomat (HA) über seinen Karteneinzug die Fahrzeugchipkarte eines nach Mietende an der betreffenden Haltestelle abgestellten Fahrzeugs zurück. Jeder Haltestellenautomat (HA) ist außerdem mit einem Drucker ausgerüstet, mit dessen Hilfe nach Beendigung einer Mietfahrt und Rückgabe der Fahrzeugchipkarte eine Quittung über den geschuldeten Mietbetrag ausgegeben wird, während die weitere Abrechnung über die Dispositionszentrale (Z) erfolgt.

Optional ist jede Haltestelle (H1) mit einer Videoüberwachung ausgerüstet, wobei Signale von der Videokamera über die Datenaustauschverbindung (2) zwischen Haltestelle (H1) und Dispositionszentrale (Z) zu letzterer hin übertragen werden. Weiter ist jede Haltestelle (H1) optional mit einem zugangskontrollierenden Drehkreuz gegen das Betreten nicht berechtigter Personen gesichert, wobei das Drehkreuz mittels Einführen der jeweiligen Fahrzeugchipkarte freigegeben wird.

Neben der Buchung und Stornierung von Reservierungen werden in der Dispositionszentrale (Z) mit der Software des dortigen Dispositionsrechners (D) auch die Funktionen Mietauftragserteilung, d.h. Erfassung von Zeitpunkt und Ort von Fahrzeugausgabe und -rücknahme sowie der Fahrzeugidentität über entsprechend zugeführte Informationen von den betreffenden Haltestellenautomaten (HA), Abrechnungserstellung, d.h. Ermittlung der Mietgebühr und Rechnungsdarstellung, Teilnehmerverwaltung, Haltestellenbelegung und Verfügbarkeitsprüfung durchgeführt. Die Teilnehmerverwaltung umfaßt die Verwaltung der Nutzeridentifikationsnummern berechtigter Systemnutzer und das Überprüfen der Nutzerberechtigung bei einer Fahrzeuganmietung, wozu der Haltestellenautomat (HA) nach eingeführter Nutzeridentifikationskarte die entsprechenden Daten an die Dispositionszentrale (Z) weiterleitet, welche diese Daten prüft und bei berechtigter Nutzungsanforderung einen Freigabebefehl an den Haltestellenautomat (HA) zur Ausgabe der entsprechenden Fahrzeugchipkarte zurücksendet. Die Haltestellenbelegungsfunktion prüft, wieviel Fahrzeuge unterwegs und wieviel Fahrzeuge an den jeweiligen Haltestellen frei verfügbar bzw. reserviert sind. Anhand dieser Funktion erfolgt dann jeweils bei einer Fahrzeuganforderung durch einen Nutzer die Prüfung, ob das gewünschte Fahrzeug zum gewünschten Zeitpunkt am gewünschten Ort verfügbar ist. Neben dem Rechner (D), z.B. einem PC mit Monitor, und den Kommunikationsschnittstellen mit ggf. erforderlichen Modems beinhaltet die Dispositionszentrale (Z) zweckmäßigerweise mindestens auch einen Drucker.

Jedes Fahrzeug des Fuhrparks ist mit einer Satellitenortungseinrichtung bestehend aus GPS-Empfänger, Modacom-Endgerät und Antenne ausgerüstet, wobei mittels des Modacom-Endgerätes über eine Funkstrecke (6) Ortungsdaten zur Dispositionszentrale (Z) übertragen werden können. Dort lassen sich dann die aktuellen Positionen der Fahrzeuge des Fuhrparks anzeigen, z.B. auf einer Landkarte am Rechnerbildschirm. Daneben können die Ortungsdaten durch entsprechende Auswertung zur Erfassung der zurückgelegten Fahrtstrecke während einer Mietfahrt herangezogen werden, wobei diese Fahrtstrecke zusätzlich zur Mietdauer Eingang in die Abrechnung finden kann. Über die optionale, für das System nicht zwingend erforderliche mobile Kommunikationsverbindung (6) zwischen den Fahrzeugen und der Dispositionszentrale (Z) ist es des weiteren möglich, der Zentrale (Z) fahrzeugseitige Störfälle zu melden und/oder Fahrzeugbetriebsdaten zu übermitteln, die dort beispielsweise zur Festlegung von Wartungsintervallen ausgewertet werden können. Weiter optional kann die Fahrzeug-Zentrale-Kommunikationsverbindung (6) bidirektional ausgestaltet sein, um beispielsweise ein als gestohlen gemeldetes Fahrzeug des Fuhrparks durch von der Zentrale (Z) ferngesteuertes Schärfen der Wegfahrsperre nach Ausschalten der Zündung stillzulegen. Alternativ zur Fahrzeugbetriebsdatenerfassung über die Fahrzeug-Zentrale-Kommunikationsverbindung (6) kann durch entsprechende Ausgestaltung der Fahrzeugchipkarte und des zugehörigen Kartenlesers vorgesehen sein, die Fahrzeugbetriebsdaten auf dieser Chipkarte abzuspeichern und jeweils am Haltestellenautomat (HA) bei Rückgabe der Chipkarte, in Fig. 1 durch den Pfeil (5) symbolisiert, auszulesen, um sie von dort über die zugehörige Datenaustauschverbindung (2) zur Zentrale (Z) zu übertragen und auf diese Weise Informationen zur optimalen Pflege und Wartung der Fuhrparkfahrzeuge zu erhalten. Des weiteren kann vorgesehen sein, auf der Fahrzeugchipkarte die jeweilige maximale Mietnutzungsdauer abzuspeichern und diese Information nach der Kartenausgabe, in Fig. 1 durch den Pfeil (4) symbolisiert, über den fahrzeugseitigen Kartenleser an das Schließanlagensteuergerät des Fahrzeugs zu übermitteln, welches dann für eine Fahrzeugstillegung bei Ablauf der maximalen Nutzungsdauer nach Ausschalten der Zündung sorgt. Als weitere Option ist in den Fahrzeugen des Fuhrparks jeweils ein Bordrechner mit zugehöriger Bildschirmanzeige vorgesehen, um eine Benutzerführung und Anleitung zur Bedienung des Mietfahrzeugverkehrssystems bereitzustellen.

In Fig. 2 ist die Kommunikationsinfrastruktur des Systems von Fig. 1 etwas genauer wiedergegeben, wobei beispielhaft neben der Dispositionszentrale (Z) drei Haltestellen (H1, H2, H3) angenommen und stellvertretend drei Fahrzeuge (F3, F4, F5) gezeigt sind. Jede Haltestelle (H1, H2, H3) ist über ein haltestellenseitiges Modem (7, 8, 9) an ein Standleitungsnetz (2') angeschlossen, an das andererseits die Zentrale (Z) über ein Modem (10) so angeschlossen ist, daß die Zentrale (Z) mit jeder Haltestelle (H1, H2, H3) einzeln in Kommunikation treten kann. Über einen Datex-P-Anschluß (12) ist die Dispositionszentrale (Z) an eine Modacom-Basiseinheit (11) angeschlossen, welche die Empfangsseite der Funkstrecke (6) zwischen dieser und den einzelnen Fuhrparkfahrzeugen (F3, F4, F5) zur Übertragung der Ortungsinformationen bildet. Nicht näher dargestellt sind in dieser Figur die Schnittstellen der Zentrale (Z) und der einzelnen Haltestellen (H1, H2, H3) zur Interaktion mit den Systemnutzern.

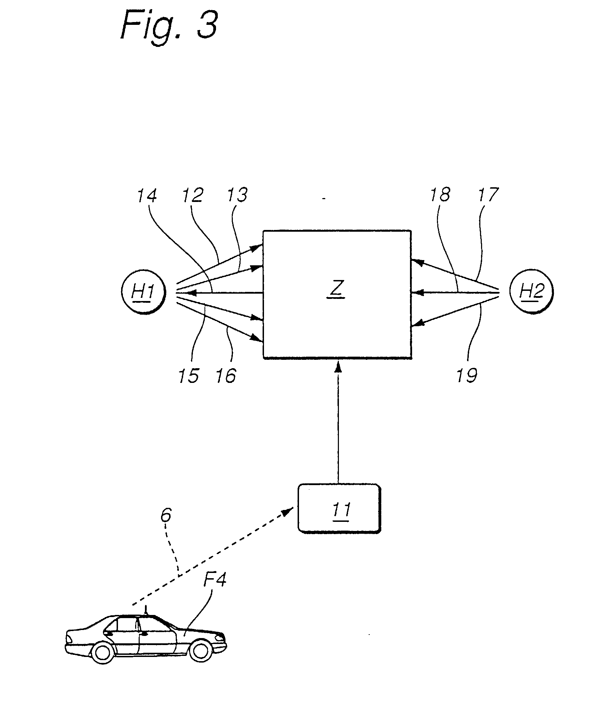

Unter Bezugnahme auf die Figuren, insbesondere auch der Fig. 3, wird nachfolgend die Benutzung des Systems anhand einer Mietfahrt eines Fahrzeugs (F4) von einer Starthaltestelle (H1) zu einer davon verschiedenen Zielhaltestelle (H2) näher erläutert.

Der Systemnutzer kann sich das gewünschte Fahrzeug (F4) vorab durch telefonische Kontaktaufnahme mit der Dispositionszentrale (Z) reservieren lassen, wozu er dann seinen Namen und/oder seine Systemnutzeridentifikation, die Starthaltestelle (H1), den voraussichtlichen Zeitpunkt der dortigen Fahrzeuganmietung, die Zielhaltestelle (H2) und den voraussichtlichen Zeitpunkt der dortigen Fahrzeugrückgabe angibt. Die Dispositionszentrale (Z) überprüft die Nutzerberechtigung sowie die Verfügbarkeit möglicher Fahrzeuge für die gewünschte Fahrt. Der Nutzer kann dann ein gewünschtes Fahrzeug auswählen, wenn er dies wünscht, indem ihn der Dispositionsrechner über die aktuelle und künftig geplante Verfügbarkeit von Fahrzeugen und freien Stellplätzen in den einzelnen Haltestellen informiert. Eine alternative Reservierung ist dadurch möglich, daß sich der Nutzer direkt an den Ort der Zentrale (Z) begibt und dort den Reservierungsauftrag tätigt. Bei optionaler Ausrüstung der Fuhrparkfahrzeuge mit der Satellitenortungseinrichtung kann sich der Nutzer dann dort an einem Bildschirm die aktuellen Fahrzeugpositionen auf einer Landkarte bzw. einem Stadtplan anzeigen lassen, was ihm weitere Hilfestellung bei der Auswahl des Fahrzeuges für die Mietfahrt geben kann. Die Reservierung erfolgt, indem der Rechner (D) die Ausgabe der Chipkarte für das gewünschte Fahrzeug (F4) bis zum gewünschten Fahrtantritt an die Eingabe der Nutzeridentität des reservierenden Benutzers an dem betreffenden Haltestellenautomat ankoppelt und damit das Fahrzeug solange für andere Systemnutzer sperrt.

Zum gebuchten Mietzeitpunkt begibt sich dann der Nutzer an die entsprechende Starthaltestelle und identifiziert sich dort am Haltestellenautomat (HA) durch Einlesen seiner Nutzeridentifikationskarte. Über die Standleitung (2) übermittelt der Haltestellenautomat (HA) die Nutzeridentifikationsdaten zur Zentrale (Z), wo sie auf eine vorliegende Reservierung hin geprüft werden. Bei erfolgreicher Identifikationsprüfung wählt der Dispositionsrechner (D) ein Fahrzeug aus dem Bestand der zugehörigen Haltestelle, ggf. das reservierte Fahrzeug, aus und sendet ein entsprechendes Chipkartenausgabesignal an den Haltestellenautomat (HA) zurück, das letzteren zur Ausgabe der zugehörigen, fahrberechtigenden Fahrzeugchipkarte veranlaßt. Gleichzeitig meldet der Haltestellenautomat (HA) den Zeitpunkt der Chipkartenausgabe sowie die Haltestellen- und die Fahrzeugidentität an die Dispositionszentrale (Z).

Der Nutzer entnimmt dem Haltestellenautomat (HA) die Fahrzeugchipkarte und führt diese in den Kartenleser an der Fahrertür des zugehörigen Fahrzeugs ein, wodurch die zentrale Schließanlage betätigt wird und das Fahrzeug geöffnet werden kann. Mit dem im Fahrzeug liegenden Zündschlüssel erfolgt dann die Inbetriebnahme des Fahrzeugs, wobei selbstverständlich alternativ der Wegfall eines Zündschlüssels und statt dessen die Betätigung eines Startknopfes möglich ist. Durch Passieren der über Induktionsschleifen betätigten Ausfahrtschranke verläßt der Nutzer mit seinem Fahrzeug (F4) die Starthaltestelle (H1). In der linken Hälfte von Fig. 3 ist der Informationsaustausch zwischen Starthaltestelle (H1) und Zentrale (Z) schematisch durch die Abfolge aus Verbindungsaufbau (12), Übermittlung der Nutzeridentifikation (13), Rückmeldung über berechtigte Nutzungsanforderung (14), Übermittlung von Ausgabezeitpunkt und Haltestellen- sowie Fahrzeugidentität (15) und Verbindungsabbau (16) dargestellt.

Während der Fahrt werden ggf. Ortungsdaten über die Funkverbindung (6) zur Modacom-Basiseinheit (11) und von dort zur Zentrale (Z) übermittelt. Bei Ankunft an der Zielhaltestelle (H2) ist zunächst die Einfahrtschranke durch Einführen der Fahrzeugchipkarte in den schrankenseitigen Kartenleser zu betätigen. Nach Abstellen des Fahrzeuges (F4) auf einem freien Standplatz im Haltestellenbereich wird das Fahrzeug mit der Fahrzeugchipkarte wieder abgeschlossen und die Chipkarte über den Karteneinzug des dortigen Haltestellenautomates (HA) wieder zurückgegeben. Letzteres gewährleistet, daß jeder Haltestellenautomat zu jedem Zeitpunkt genau die Chipkarten der im zugehörigen Haltestellenbereich befindlichen Fahrzeuge enthält. Bei der Rücknahme der Fahrzeugchipkarte liest der Haltestellenautomat die Fahrzeugidentität ab und übermittelt diese sowie die Haltestellenidentität und den Rückgabezeitpunkt an die Zentrale (Z). Der diesbezügliche Kommunikationsablauf ist auf der rechten Hälfte von Fig. 3 schematisch in Form des Verbindungsaufbaus (17), der eigentlichen Datenübermittlung (18) und des Verbindungsabbaus (19) dargestellt. In der Zentrale (Z) werden die empfangenen Daten zusammen mit den von der Starthaltestelle (H1) empfangenen Daten zur Abrechnung ausgewertet, wobei in die Mietpreisberechnung je nach Wunsch Start- und Zielort sowie Nutzungsdauer und ggf. auch die über die Ortungsdaten erkannte zurückgelegte Fahrtstrecke einfließen.

Um einen öffentlichen Individualverkehr zu realisieren, bietet das System alternativ zur oben beschriebenen Vorabreservierung eines Fahrzeugs aus dem Fuhrpark die Möglichkeit einer spontanen Fahrzeuganmietung ohne vorhergehende Reservierung oder Buchung. Zu diesem Zweck begibt sich der Nutzer direkt bei Fahrtantritt zur gewünschten Starthaltestelle und nimmt über die Telefonstandleitung vom dortigen Haltestellenautomat (HA) aus Verbindung zur Zentrale (Z) auf und weist sich gleichzeitig am Haltestellenautomat durch Eingeben seiner Nutzeridentifikationskarte als berechtigter Systemnutzer aus. Über den mit der Zentrale (Z) geführten Dialog mietet er dann in gleicher Weise wie oben im Reservierungsfall beschrieben eines der an der Haltestelle gerade vorhandenen Fahrzeuge an, wobei er gegenüber einer Vorabreservierung selbstverständlich nur noch eine verringerte Auswahlmöglichkeit unter den dort momentan freien Fahrzeugen hat. Nach Zuweisung eines freien Fahrzeugs erfolgt der restliche Ablauf der Fahrzeugvermietung in gleicher Weise, wie oben im Fall eines vorab reservierten Fahrzeugs beschrieben.

Ersichtlich bietet das oben beschriebene System eine effiziente Möglichkeit, Fahrzeuge individuell und kostengünstig auch für kurze Zeiträume zur Verfügung zu stellen. Das Fahrzeug braucht nicht am Ort der Anmietung zurückgegeben werden. Vorteilhafterweise bietet das System die Möglichkeit einer Reservierung individueller Fahrzeuge. Hervorzuheben ist des weiteren, daß das System keinerlei Kommunikationsverbindung zwischen den einzelnen Haltestellen und den Fahrzeugen benötigt und daß auch eine derartige Verbindung zwischen den Fahrzeugen und der Zentrale nicht zwingend erforderlich ist. Außerdem ist bei diesem System sowohl eine Fahrzeugreservierung als auch eine spontane Fahrzeuganmietung möglich. Die Haltestellen sind vollständig automatisiert, so daß dort kein Personal erforderlich ist. Auch die Zentrale selbst kann bei Bedarf vollständig automatisiert sein und ohne Personalbedarf auskommen. Vorteilhaft ist weiterhin, daß die Fahrberechtigungen fahrzeugspezifisch ausgegeben werden, so daß ein von einem Nutzer angemietetes Fahrzeug nicht von anderen Systemnutzern betrieben werden kann.

## Patentansprüche

1. Mietfahrzeugverkehrssystem, mit
- einem Fuhrpark mit einer Mehrzahl nutzbarer Fahrzeuge (F1, F2, F3, F4, F5),
- einer oder mehreren Haltestellen (H1, H2, H3), die jeweils mehrere Fahrzeugstandplätze umfassen und an denen die Fahrzeuge ausgegeben und zurückgenommen werden,
- einem Haltestellenautomat (HA) an jeder Haltestelle gemeinsam für die mehreren Standplätze zum Ausweisen der Nutzeridentität, zur jeweiligen Ausgabe einer in ihm abgelegten, von den Nutzeridentitätsausweismitteln getrennten Fahrberechtigung für ein dort abgestelltes Fahrzeug bei positiver Berechtigungsprüfung und zur Rückgabe der Fahrberechtigungen für dort zurückgenommene Fahrzeuge und
- einer Zentrale (Z), die mit jedem Haltestellenautomat zur Übermittlung wenigstens von Ausgabe- und Rückgabezeitpunkten in Kommunikationsverbindung (2) steht,
**dadurch gekennzeichnet, daß**
- die Zentrale als Dispositionszentrale (Z) mit einem Dispositionsrechner (D) ausgebildet ist, der zur Nutzerberechtigungsprüfung anhand von ihm von den Haltestellenautomaten (HA) zugeführten Nutzeridentitätsdaten, zur Auswertung der individuellen Verfügbarkeit der Fahrzeuge an den jeweiligen Haltestellen (H1, H2, H3) unter Berücksichtigung von ihm von den Haltestellenautomaten zugeführten, fahrzeugspezifischen Vermietinformationen und zum Empfang benutzerseitiger Fahrzeugreservierungsanforderungen eingerichtet ist, wobei
- der Dispositionsrechner zur Durchführung einer Reservierung ein ausgewähltes, noch freies Fahrzeug an der gewünschten Starthaltestelle bis zum Fahrtantrittszeitpunkt spezifisch der berechtigenden Identität des reservierenden Nutzers zugeordnet und wobei
- der Dispositionsrechner nach einer erfolgreichen Nutzerberechtigungsprüfung ein Befehlssignal an den entsprechenden Haltestellenautomat (HA) zur Ausgabe einer Fahrberechtigung für das für diese Nutzeridentität reservierte Fahrzeug oder bei fehlender Reservierung für ein noch nicht reserviertes Fahrzeug abgibt.

2. Mietfahrzeugverkehrssystem nach Anspruch 1, weiter
**gekennzeichnet durch**
eine haltestellenunabhängige Kommunikationsverbindung (1) zwischen Nutzer (N) und Dispositionszentrale (Z) und/oder eine an die Kommunikationsverbindung (2) zwischen Haltestellenautomat (HA) und Dispositionszentrale angeschlossene, nutzerbetätigbare Dialogschnittstelle an einem jeweiligen Haltestellenautomat zwecks Informationsaustausch zwischen Nutzer (N) und Dispositionszentrale (Z) zur Fahrzeuganmietung.

3. Mietfahrzeugverkehrssystem nach Anspruch 1 oder 2, weiter
**dadurch gekennzeichnet, daß**
die ausgegebenen Fahrberechtigungen fahrzeugspezifisch codierte Chipkarten sind, welche jeweils den Zugang zu einem zugeordneten Fahrzeug freigeben.

4. Mietfahrzeugverkehrssystem nach Anspruch 3, weiter
**dadurch gekennzeichnet, daß**
auf jeder Fahrzeugchipkarte erfaßte Fahrzeugbetriebsdaten abspeicherbar sind, die von den Haltestellenautomaten (HA) bei der Chipkartenrücknahme auslesbar und an die Dispositionszentrale (Z) übermittelbar sind.

5. Mietfahrzeugverkehrssystem nach Anspruch 3 oder 4, weiter
**dadurch gekennzeichnet, daß**
auf der Fahrzeugchipkarte eine maximale Nutzungsdauerinformation abspeicherbar ist, die bei Fahrtantritt an ein Schließanlagensteuergerät des Fahrzeugs übertragen wird, welches bei abgelaufener maximaler Nutzungsdauer nach einem Abstellen des Fahrzeugs die weitere Zugangsberechtigung mit der Chipkarte sperrt.

6. Mietfahrzeugverkehrssystem nach Anspruch 5, weiter
**dadurch gekennzeichnet, daß**
die Fahrzeuge mit Wegfahrsperren ausgerüstet sind, die bei abgelaufener maximaler Nutzungsdauer aktiviert werden.

7. Mietfahrzeugverkehrssystem nach einem der Ansprüche 1 bis 6, weiter
**dadurch gekennzeichnet, daß**
die Fahrzeuge mit einer Satellitenortungseinrichtung ausgerüstet sind und eine drahtlose Kommunikationsverbindung (6) zur Übermittlung wenigstens von Ortungsdaten von den Fahrzeugen zur Dispositionszentrale (Z) vorgesehen ist.

8. Mietfahrzeugverkehrssystem nach einem der Ansprüche 1 bis 7, weiter
**dadurch gekennzeichnet, daß**
der Fahrzeugzugang zu den Haltestellenstandflächen nur über eine Einfahrtkontrollschranke und/oder der Personenzugang nur über eine Zutrittskontrollschranke möglich ist, wobei die Schranken jeweils durch die Fahrzeugchipkarten aktivierbar sind.

## Claims

1. Hire vehicle transport system, having
- a pool of vehicles with a plurality of usable vehicles (F1, F2, F3, F4, F5),
- one or more collection and return points (H1, H2, H3) which in each case comprise several vehicle stands and at which the vehicles are issued and taken back,
- an automatic collection and return machine (HA) at each collection and return point for checking user identity, for respectively issuing a driving authorization, stored in said machine and separated from the user identity checking means, for a vehicle parked there when there is a positive authorization test and for returning the driving authorizations for vehicles taken back there, and
- a control centre (Z) which has a communication link (2) with each automatic collection and return machine for transferring at least issuing and return times, characterized in that
- the control centre is constructed as a disposition centre (Z) with a disposition computer (D) which is designed to test user authorization using user identity data supplied to it by the automatic collection and return machines (HA), to evaluate the individual availability of the vehicles at the respective collection and return points (H1, H2, H3) taking into account vehicle-specific rental information supplied to it by the automatic collection and return machine and to receive user-side vehicle reservation requests, in which case,
- in order to make a reservation, the disposition computer assigns a selected vehicle, which is still free at the desired starting collection and return point, specifically to the authorizing identity of the reserving user until the time when the journey is to begin, and in which case,
- after a successful user authorization test, the disposition computer outputs an instruction signal to the corresponding automatic collection and return machine (HA) to issue a driving authorization for the vehicle reserved for this user identity or, in the absence of a reservation, for a vehicle not yet reserved.

2. Hire vehicle transport system according to Claim 1, further characterized by a communication link (1) which is independent of collection and return points, between a user (N) and disposition centre (Z) and/or a dialogue interface which is connected to the communication link (2) between the automatic collection and return machine (HA) and the disposition centre and can be actuated by the user, at a respective automatic collection and return machine in order to exchange information between user (N) and disposition centre (Z) for hiring a vehicle.

3. Hire vehicle transport system according to Claim 1 or 2, further characterized in that the driving authorizations which are issued are chip cards which are coded in a vehicle-specific way and which in each case enable access to an assigned vehicle.

4. Hire vehicle transport system according to Claim 3, further characterized in that vehicle operating data which are collected on each vehicle chip card can be stored and can be read out by the automatic collection and return machines (HA) when the chip card is taken back and can be transferred to the disposition centre (Z).

5. Hire vehicle transport system according to Claim 3 or 4, further characterized in that information relating to the maximum period of use can be stored on the vehicle chip card and is transmitted to a locking-system control unit of the vehicle when the journey is begun, which locking-system control unit blocks further access authorization with the chip card after the vehicle has been parked when the maximum period of use has expired.

6. Hire vehicle transport system according to Claim 5, further characterized in that the vehicles are equipped with immobilizers which are activated when the maximum period of use has expired.

7. Hire vehicle transport system according to one of Claims 1 to 6, further characterized in that the vehicles are equipped with a satellite locating device and a wireless communication link (6) in order to transfer at least locating data from the vehicles to the disposition centre (Z).

8. Hire vehicle transport system according to one of Claims 1 to 7, further characterized in that the access of vehicles to the standing areas of the collection and return points is possible only via an entry control barrier and/or access of persons is only possible via an entry control barrier, it being possible to activate the respective barriers by means of the vehicle chip cards.

## Revendications

1. Système de circulation de véhicules de location incluant:
un parc de véhicules comprenant une série de véhicules utilisables (F1, F2, F3, F4, F5),
une ou plusieurs stations de garage (H1, H2, H3) qui comprennent chacune un ou plusieurs emplacements de garage de véhicules, et où les véhicules peuvent être mis à disposition ou repris,
un équipement automatique (HA) de station de garage, installé en commun pour la série d'emplacements de garage à chaque station de garage, pour reconnaître l'identité des utilisateurs, émettre respectivement si l'examen d'autorisation est positif une autorisation de rouler qui y est enregistrée, est séparée des moyens de reconnaissance d'identité d'utilisateurs et concerne un véhicule qui y est garé, et pour rendre les autorisations de rouler pour des véhicules qui y ont été repris,
une centrale (Z) qui est en relation de communications (2) avec chaque équipement automatique de station de garage pour transmettre au moins les instants où les véhicules ont été mis à disposition et rendus,
caractérisé en ce que
la centrale est réalisée sous forme de centrale d'ordonnancement (Z) incluant un ordinateur d'ordonnancement (D) qui est agencé pour contrôler des autorisations d'utilisateurs au moyen de données d'identité d'utilisateurs qui lui sont amenées par les équipements automatiques (HA) des stations de garage, pour évaluer la disponibilité individuelle des véhicules aux stations respectives de garage (H1, H2, H3) en tenant compte d'informations de location spécifiques aux véhicules qui lui sont amenées par les équipement automatiques de stations de garage et pour recevoir des demandes de réservation de véhicules formulées par les utilisateurs, et en ce que
pour effectuer une réservation, l'ordinateur d'ordonnancement associe spécifiquement, à l'identité autorisante de l'utilisateur qui réserve, un véhicule sélectionné, encore libre à la station de garage souhaitée de départ jusqu'à l'instant du début du voyage, et
après avoir contrôlé avec succès l'autorisation de l'utilisateur, l'ordinateur d'ordonnancement envoie à l'équipement automatique (HA) de station de garage un signal d'ordre d'émission d'autorisation de rouler, soit pour le véhicule réservé pour cette identité d'utilisateur, soit pour un véhicule qui n'est pas encore réservé en cas d'absence de réservation.

2. Système de circulation de véhicules de location selon la revendication 1, caractérisé en outre par
une liaison de communication (1), dépendant de la station de garage et établie entre un utilisateur (N) et la centrale d'ordonnancement (Z), et/ou une interface de dialogue installée à chaque équipement automatique de station de garage, manoeuvrable par un utilisateur et raccordée à la liaison de communication (2) entre l'équipement automatique (HA) de station de garage et la centrale d'ordonnancement, pour permettre des échanges d'informations entre un utilisateur (N) et la centrale d'ordonnancement (Z) au sujet de la location de véhicules.

3. Système de circulation de véhicules de location selon la revendication 1 ou 2, caractérisé en outre en ce que
les autorisations de rouler émises sont codées de façon spécifique aux véhicules sur des cartes à mémoire qui permettent respectivement l'accès à un véhicule associé.

4. Système de circulation de véhicules de location selon la revendication 3, caractérisé en outre en ce que
des données détectées de fonctionnement de véhicule qui sont lisibles par les équipements automatiques (HA) de stations de garage lors de la reprise de la carte à mémoire et sont transmissibles à la centrale d'ordonnancement (Z) peuvent être mémorisées sur chaque carte à mémoire de véhicule.

5. Système de circulation de véhicules de location selon la revendication 3 ou 4, caractérisé en outre en ce que
sur la carte à mémoire du véhicule peut être mémorisée une information de durée maximale d'utilisation qui est transférée au début du voyage à un dispositif de commande de l'installation de fermeture de véhicule, dispositif qui bloque, lorsque le véhicule a été garé après épuisement de la durée maximale d'utilisation, toute autorisation ultérieure d'accès au moyen de la carte à mémoire.

6. Système de circulation de véhicules de location selon la revendication 5, caractérisé en outre en ce que
les véhicules sont équipés de blocages de départ qui sont activés après épuisement d'une durée maximale d'utilisation.

7. Système de circulation de véhicules de location selon l'une des revendications 1 à 6, caractérisé en outre en ce que
les véhicules sont équipés d'un dispositif de localisation par satellite et une liaison de communication sans fil (6) est prévue pour transmettre à la centrale d'ordonnancement (Z) au moins des données de localisation des véhicules.

8. Système de circulation de véhicules de location selon l'une des revendications 1 à 7, caractérisé en outre en ce que
l'accès des véhicule aux zones des stations de garage n'est possible que par des barrières de contrôle d'entrée, et/ou l'accès de personnes n'est possible que par une barrière de contrôle d'entrée des personnes, et les barrières sont activées par les cartes à mémoire des véhicules.
